# EUROPEAN PATENT SPECIFICATION

(11) **EP 2 836 780 B1**
(45) Date of publication and mention of the grant of the patent: **10.08.2016**
(21) Application number: 13713499.5
(22) Date of filing: 21.01.2013
(51) Int. Cl.: F27D 25/00, B08B 1/00, B08B 1/04, B21B 28/04, B24B 5/36, B24B 9/00, B24B 29/08, B65G 45/10, C03B 35/16

(54) **APPARATUS FOR TREATING ROLLERS**
VORRICHTUNG ZUR BEHANDLUNG VON WALZEN
APPAREIL DE TRAITEMENT DE ROULEAUX

(30) Priority: 24.01.2012 IT MO20120013
(43) Date of publication of application: 18.02.2015
(73) Proprietor: Eurotech Way S.R.L., 42013 Casalgrande (RE) (IT)
(72) Inventor: GRAPPI, Francesco, I-42010 Castellarano (Reggio Emilia) (IT)
(74) Representative: Crugnola, Pietro
(86) International application number: PCT/IB2013/050531
(87) International publication number: WO 2013/111046

(56) References cited:
- EP-A1- 2 400 246

## Description

The invention relates to an apparatus for treating rollers, in particular melted silica rollers used in a kiln for thermally treating a material, for example for hardening a vitreous material.

The vitreous material is processed inside the kiln in such a manner as to obtain therefrom, for example, a plurality of slabs. The slabs of vitreous material are heated inside the kiln, for example to the hardening temperature, and are subsequently cooled rapidly, for example by jets of a fluid, in particular of air. In this manner, the surface layers of the slabs are cooled, causing the hardening thereof, whilst the internal part remains hot for longer.

In order to move the slabs of vitreous material, the slabs of vitreous material are arranged to rest on roller conveying devices and are slid on the latter once they are rotated. These rollers are then used as supporting and conveying means of the slabs of vitreous material.

Whilst the slabs of vitreous material are slid on the rollers, it is possible that particles of vitreous material remain attached to an external surface of each roller with which they come into contact.

The rollers are in fact also situated in kiln zones in which the temperature is such that the slabs of vitreous material are not yet hardened.

This may mean that the particles of vitreous material that have stuck to the external surfaces of the rollers create roughness on the surface of the rollers, damaging and in particular scratching the slabs of vitreous material obtained during a processing cycle.

Likewise, dust that is inevitably present inside the kiln can dirty the rollers and damage the slabs of vitreous material that are produced inside the kiln and run on the rollers.

Consequently, periodical maintenance operations must be conducted on the aforesaid rollers, such as cleaning and/or lapping treatment, to restore the external surface of the rollers to optimum conditions for conveying the slabs of vitreous material.

In order to perform the aforesaid maintenance operations, it is necessary to stop the operation of the kiln in such a manner as to lower the temperature thereof and enable assigned operators, in particular at least two assigned operators, to extract each roller from the conveying device, one after the other.

Once the rollers have been extracted, the operators subject the rollers to cleaning and/or lapping and subsequently rearrange the rollers in the conveying device.

Maintenance operations are thus very laborious and of significant duration.

This entails reduced kiln productivity and high maintenance costs because assigned operator have to be assigned, at least two operators, to handle and clean the rollers without damaging the rollers.

From the prior art an apparatus for treating rollers is known, that is provided with rotating cleaning elements, that can be rested on the rollers of a roller conveyor. The apparatus is provided with locking means that maintains the apparatus in a fixed position on the roller conveyor, whilst the rollers are rotating, to enable the cleaning means to perform a cleaning operation on a pair of adjacent rollers, eliminating impurities and incrustations on the pair of rollers. The apparatus is moreover able to move along the roller conveyor by exploiting the rotation movement of the rollers.

An apparatus of the type mentioned above is disclosed in EP 2 400 246 A1 in the name of the same applicant.

Such an apparatus enables the operations of cleaning the rollers of a roller conveyor to be performed automatically without having to dismantle the rollers.

Nevertheless, such an apparatus has a drawback, which resides in the fact that is sized on the basis of the length of the rollers to be cleaned and cannot be used to clean rollers of a different length.

An object of the invention is to provide an apparatus for treating rollers, in particular the rollers of a conveying device located in a kiln, for example in a kiln for hardening a vitreous material, which can be easily configured for treating rollers of differing length, starting with a minimum length.

According to the invention, an apparatus is provided for treating rollers as defined in claim 1.

The apparatus for treating rollers according to the invention can be used for treating rollers of different length, starting from a minimum length, and can be rapidly and easily adapted to rollers of different length, greater than said minimum length.

The invention can be better understood and implemented with reference to the attached drawings that illustrate an embodiment thereof by way of non-limiting example, in which:
Figure 1 is a perspective top view of an apparatus for treating rollers according to the prior art, disclosed in EP 2 400 246 A1;
Figure 1A is an enlarged detail of the apparatus in Figure 1;
Figure 2 is a side view of the apparatus in Figure 1;
Figure 3 is a perspective view of a detail of an apparatus according to the invention;
Figures 3a and 3b illustrate details of the apparatus in Figure 3;
Figure 4 is a perspective view of a further detail of a apparatus according to the invention that illustrates a first step of an adaptation operation for adaptation the apparatus to rollers of different length;
Figure 5 is a perspective view like that of Figure 3 that illustrates a second step of the adaptation step;
Figure 6 illustrates a third step of the adaptation operation;
Figure 7, 7a and 7b illustrate a fourth step of the adaptation operation;
Figure 8 illustrates a fifth step of the adaptation operation;
Figures 9 and 9a illustrate a sixth step of the adaptation operation;
Figures 10 and 11 illustrate the final step of the adaptation operation.

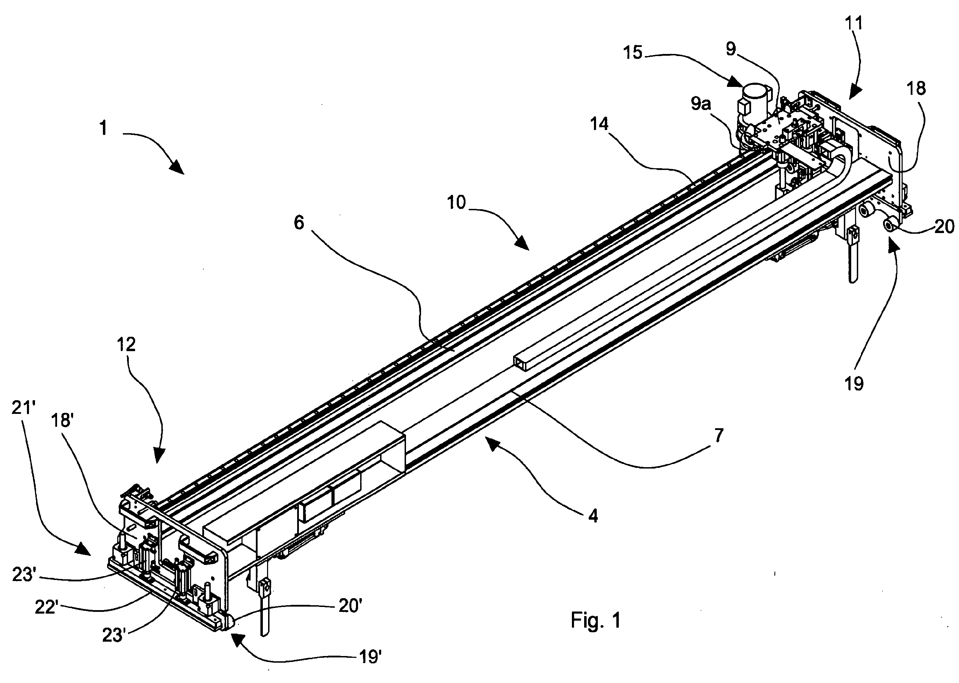

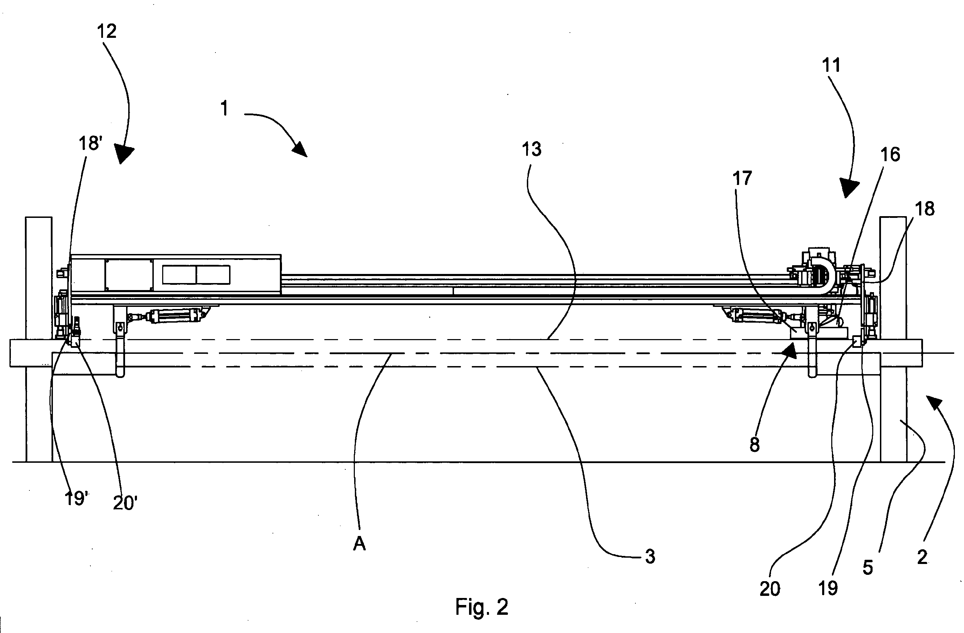

In Figures 1 and 2 an apparatus 1 is shown for treating rollers according to EP 2 400 246 A1 of the same applicant, which, in use, is mounted above a roller conveying device that enables slabs of vitreous material that are not illustrated to be supported and conveyed inside a kiln for hardening the vitreous material.

The conveying device 2 is supported on a supporting structure 5 and comprises a plurality of rollers 3 (Figure 2), arranged alongside one another, having respective rotation axes A that are reciprocally parallel and perpendicular to an advancing direction of the slabs in vitreous material on the conveying device 2.

Each roller 3 can be made of melted silica.

In use, the apparatus 1 for treating rollers is arranged resting on a part of the rollers 3 that make up the conveying device 2.

The apparatus 1 for treating rollers is arranged for performing maintenance operations on the rollers 3, such as cleaning or lapping treatment.

The apparatus 1 for treating rollers comprises a frame 4, provided with a first crosspiece 6 having a length that is substantially similar to that of each roller.

The frame 4 further comprises a second crosspiece 7 that is arranged parallel to the first crosspiece 6 and also has a length that is substantially similar to that of each roller.

The apparatus 1 for treating rollers further comprises cleaning means 8 (Figure 1A) arranged for subjecting the rollers to a cleaning and/or lapping treatment.

The cleaning means 8 comprises a carriage 9 that is movable between a first end 11 of the apparatus, for treating rollers 1 and a second end 12 of the apparatus 1 for treating rollers opposite the first end 11.

The carriage 9 slides along translating means 10 that is arranged, for example, on the first crosspiece 6, in such a manner as to move the cleaning means 8 along the entire length of each roller 3.

The translating means 10 can comprise a guide 14, for example a belt, arranged along the length of the first crosspiece 6 and with which a slide 9a of the carriage 9 is slidably coupled.

The translating means 10 can be arranged, alternatively, along the second crosspiece 7.

The translating means 10 further comprises movement means 15 that can comprise a motor, for example a linear motor, or any other device that enables the carriage 9 to be moved in a direction that is substantially parallel to the rotation axes of the rollers 3 or, alternatively, to move the guide 14 by dragging the carriage 9 therewith.

For example, the motor 15, by driving the belt 14, enables the carriage 9 to slide along the first crosspiece 6, in a direction parallel to the longitudinal axis of the rollers 3.

The cleaning means 8 further comprises a supporting head 16 on which a cleaning tool 17 is rested that, in use, interacts, in particular when the rollers 3 are rotated, with the external surface 13 of the rollers 3.

The cleaning tool 17 comprises a layer 26 made of an elastic material, for example of rubber or of a silicone material in which a plurality of cleaning elements 27 can be arranged, having a substantially parallelpipedon shape, that are shown, in particular, in Figure 1A.

Each cleaning element 27 is partially submerged inside the layer 26 and partially protrudes therefrom. In particular, each cleaning element 27 comprises at least one edge 28 that projects beyond the layer 26. The edge 28, after the supporting head 16 has been positioned near the conveying device 2 and the rollers 3 are rotated, makes contact with the external surface 13 of each roller 3, exerting a pressure that is such as to eliminate impurities, such as particles of vitreous material or of dust, that may become deposited thereupon and spoil the slabs of vitreous material produced in the kiln by hardening of the glass. The pressure exerted must be simultaneously such as not to damage the external surface 13 of each roller 3.

In order not to spoil the external surface 13, the cleaning elements 27 can be made of a material that partially flexes in contact with the external surface 13.

The flexibility of the cleaning elements 27 and the elasticity of the second layer 26 prevent the cleaning elements 27 being able to damage the external surface 13 of the rollers 3.

The cleaning elements 27 act like spatulas on the external surface 13 to eliminate the aforesaid impurities.

The cleaning elements 27 can be arranged radially in the second layer 26.

The cleaning elements 27 can also be mounted on springs.

For a more detailed description of the cleaning tool and of the supporting head, see the description of EP 2 400 246 A1, which is deemed to be incorporated herein for reference.

The frame 4 comprises a first connecting plate 18, which connects the first crosspiece 6 to the second crosspiece 7 at the first end 11 of the apparatus 1, and a second connecting plate 18', which connects the first crosspiece 6 to the second crosspiece 7 at the second end 12 of the apparatus 1.

The connecting plates 18 and 18' are arranged transversely to the first crosspiece 6 and to the second crosspiece 7.

The connecting plates 18 and 18' are substantially slab-shaped and are arranged at a height with respect to the external surface 13 of the rollers 3 that is such as not to interact with the rollers 3 when the apparatus 1 for treating rollers is located on the rollers 3.

Each connecting plate 18, 18' is provided below with respective locking means 19, 19' that extend from the respective connecting plate 18, 18' downwards, i.e. to the rollers 3 and are provided with a plurality of locking wheels 20, 20', respectively suitable for being inserted into the gaps betwen the rollers 3, when the apparatus 1 is rested on the rollers 3, in such a manner as to lock the frame 4 on the conveying device 2 to enable the cleaning means 8 to maintain a substantially stable position with respect to the rollers 3 during operation thereof and to focus cleaning and/or lapping treatment on a set zone of the external surface 13 of the rollers 3, making cleaning and/or lapping treatment significantly effective. Further, locking the frame 4 on the conveying device 2 enables the carriage 9 and the cleaning tool 17 to be driven to act on the external surface 13 of the rollers 3 in a stable manner, i.e. in such a manner as to avoid or minimise movements, for example oscillations, that the movement of the carriage 9 and/or of the cleaning tool 17 can entail during operation thereof.

For a detailed description of the locking means 19, 19' and of the operation thereof, see the description of EP 2 400 246 A1.

With each connecting plate 18, 18' respective lifting means 21, 21' is further connected that is arranged for resting on the external surface 13 of a part of the rollers 3 and for lifting the frame 4, together with the locking wheels 37, moving the latter away from the rollers 3.

The lifting means 21, 21' each comprise a respective pad 22, 22' having a substantially parallelpipedon shape. The pads 22, 22' are movable in a direction that is perpendicular to the surface of the rollers 3 between a first non-operating position and a second operating position in which they lift the apparatus 1 and maintain the apparatus 1 lifted with respect to the rollers 3 in such a manner that the locking wheels 20, 20' are no longer in contact with the rollers 3.

The lifting means 21, 21' comprises actuating means 23, 23' that connects the lifting means 21, 21' to the respective connecting plate 18, 18'.

The actuating means 23, 23', by pushing the pads 22,22' downwards, raises the apparatus 1, which causes the locking wheels 20, 20' to be moved away from the rollers 3, after a cleaning and/or lapping treatment has been performed on a group of rollers 3, in such a manner as to enable the apparatus 1 to move along the rollers 3, exploiting the movement thereof, until it is positioned at a subsequent group of rollers 3 on which to perform another cleaning and/or lapping treatment.

For a more detailed description of the lifting means 21, 21', of the actuating means 23, 23' and of the operation thereof, see the description of the EP 2 400 246 A1.

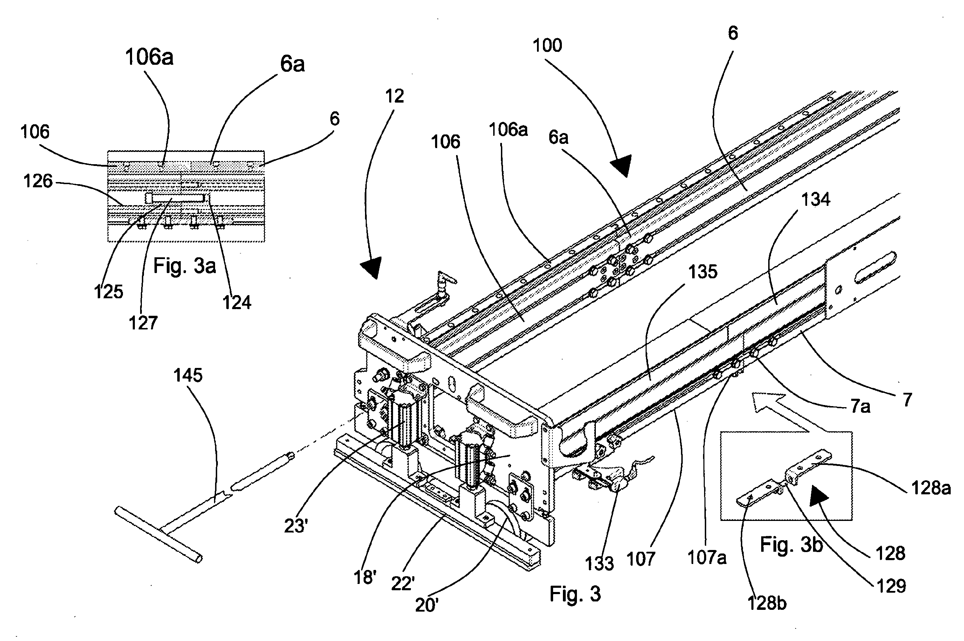

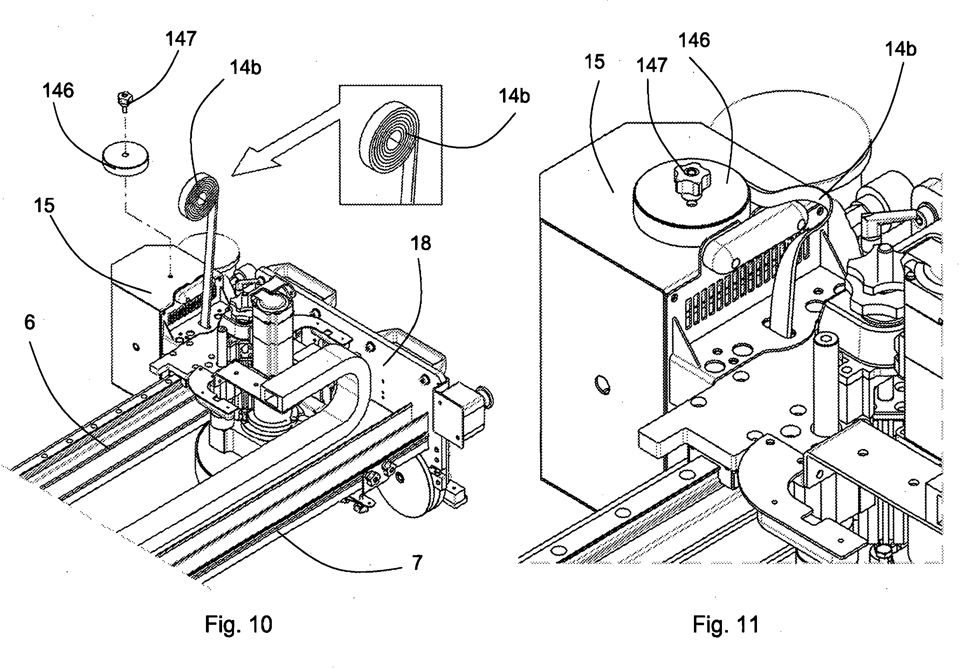

In Figures 3 to 11, an apparatus 100 according to the invention is illustrated. The parts of the apparatus 100 according to the invention that are similar to the corresponding parts of the apparatus 1 according to the prior art illustrated in Figures 1 and 2 are indicated by the same reference numbers.

Figure 3 is a partial perspective view of an apparatus 100 according to the invention that illustrates a part of the apparatus 100 ending at the second end 12, the rest of the apparatus being substantially the same as the apparatus 1 disclosed in EP 2 400 246 A1.

In the apparatus 100 according to the invention, between the first crosspiece 6 and the second connecting plate 18' a first crosspiece portion 106 is interposed that is removably fixed to an end 6a of the first crosspiece 6 and to the second connecting plate 18'.

Similarly, between the second crosspiece 7 and the second connecting plate 18' a second crosspiece portion 107 is interposed that is removably fixed to an end 7a of the second crosspiece 7 and to the second connecting plate 18'. By removing the first crosspiece portion 106 and the second crosspiece portion 107, or by replacing the first crosspiece portion 106 and the second crosspiece portion 107 with portions of crosspiece of different length it is possible to adapt the apparatus 100 according to the invention to rollers 3 of different length, starting from a minimum length that depends on the length of the first crosspiece 6 and of the second crosspiece 7.

In Figure 3a it is illustrated in what way the first crosspiece portion 106 is removably fixed to the first crosspiece 6. At the end 6a of the first crosspiece 6 a first nut screw 124 is arranged, whilst at the end 106a of the first crosspiece portion 106 a second nut screw 125 is arranged that, when the first crosspiece portion 106 is moved to the first crosspiece 6, is aligned with the first nut screw 124. The first crosspiece portion 106 is provided with a cavity 126 that extends over the entire length thereof and contains the second nut screw 125. The cavity 126 is used to introduce into the first crosspiece portion 106 a screw 127 that is screwed in the first nut screw 124 and in the second nut screw 125 to achieve fixing of the first crosspiece portion 106 to the first crosspiece 6. Inserting and tightening the screw 127 can be achieved by using a socket wrench 145, of suitable length. The socket wrench 145 is also usable for unscrewing and extracting the screw 127, when the first crosspiece portion 106 has to be dismantled from the first crosspiece 6.

In Figure 3b fixing of the second crosspiece portion 107 to the second crosspiece 7 is shown. Fixing occurs by means of a connecting element 128 that comprises a first part 128a, fixed to the lower part of the end 7a of the second crosspiece 7, and a second part 128b fixed to the lower part of the end 107a of the second crosspiece portion 107. The first part 128a and the second part 128b of the connecting element 128 are fixable together by a fixing element 129, for example by a bolt.

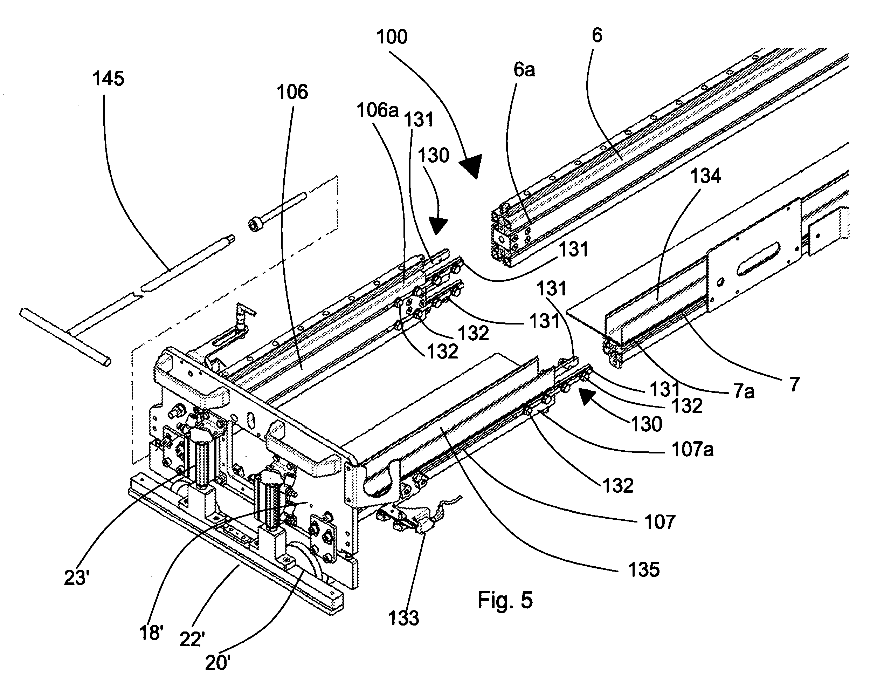

In order to further reinforce fixing of the crosspiece portions 106, 107 to the respective crosspieces 6, 7, further connecting elements 130 are further provided (Figure 5), each of which comprises a plate 131 that is fixable by bolts 132 to the respective ends 6a, 106a; 7a, 107a of the crosspieces 6, 7 and of the crosspiece portions 106, 107.

To one of the crosspiece portions 106, 107, for example to the first portion 107, a photocell 133 is removably fixed, for example by screws, that is used to detect possible undesired movement of the apparatus 100 in a direction that is parallel to the axis A of the rollers 3, when the apparatus 100 is in operation. If the photocell 133 detects said undesired movement, it commands the activation of a visual or acoustic alarm signal in such a manner that an operator assigned to apparatus 100 can remedy the undesired movement.

On the second crosspiece portion 107 a channel portion 135 is made that, when the second crosspiece portion 107 is connected to the second crosspiece 7, constitutes a continuation of the channel 134.

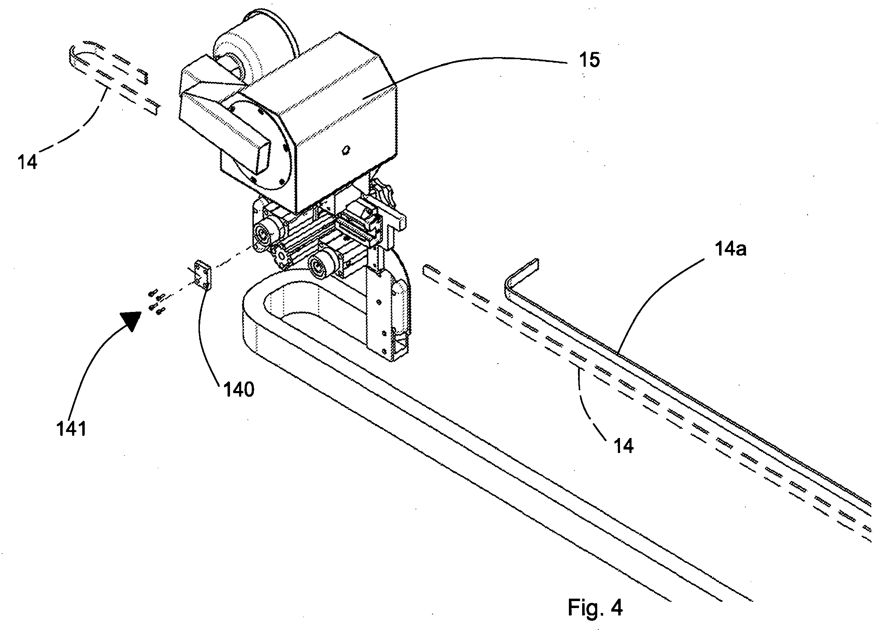

In Figures 4 to 11 the operations are illustrated that are to be performed to vary the length of the apparatus 100 to adapt the apparatus 100 to the length of the rollers 3. In particular, the operations are illustrated that are to be performed to reduce the length of the apparatus 100.

First of all, as shown in Figure 4, a branch of the belt 14 is disconnected, for example the upper branch 14a, from the carriage 9, by dismantling a fixing clamp 140 of the belt 14, connected to the carriage 9 by screws 141.

Subsequently, in Figures 3 and 5, the screw 127 is unscrewed and extracted from the cavity 126 of the first crosspiece portion 106 by means of the wrench 145. The bolt 129 is then unscrewed which connects the first part 128a and the second part 128b of the connecting element 128 and the screws 132 are loosened that connect the plates 131 to the ends 6a 7a of the crosspieces 6 and 7, in such a manner as to thus separate the crosspiece portions 106, 107 from the respective crosspieces 6, 7.

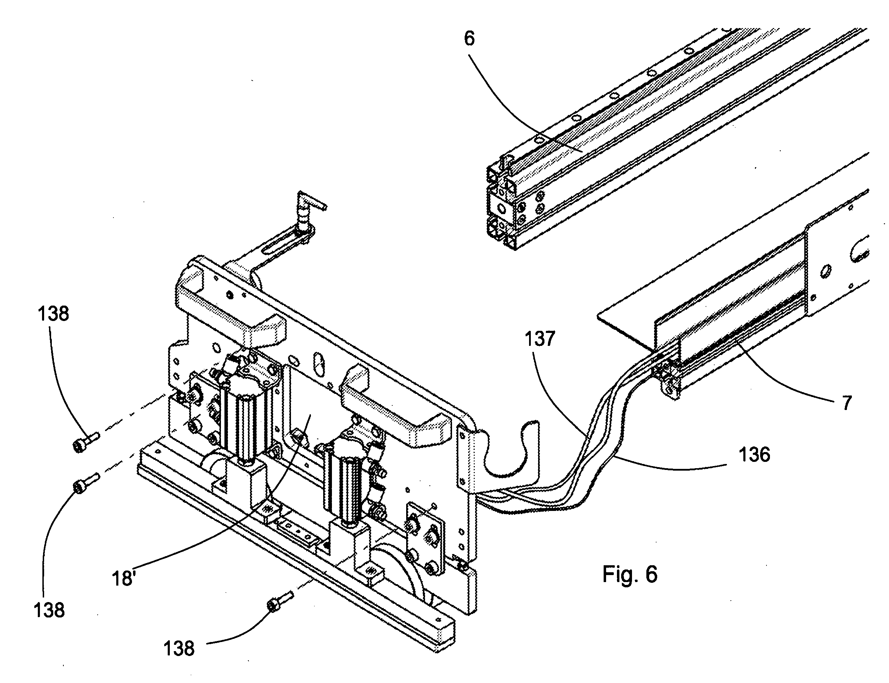

After separating the crosspiece portions 106, 107 from the respective crosspieces 6, 7, the second connecting plate 18' is separated from the crosspiece portions 106, 107 by unscrewing the screws 138 that connect said second connecting plate 18' to the crosspiece portions 106, 107 and from the channel portion 135 of the second crosspiece portion 107 the electric cables 136 and the pipes 137 of the pneumatic system of the apparatus 100 are extracted (Figure 6).

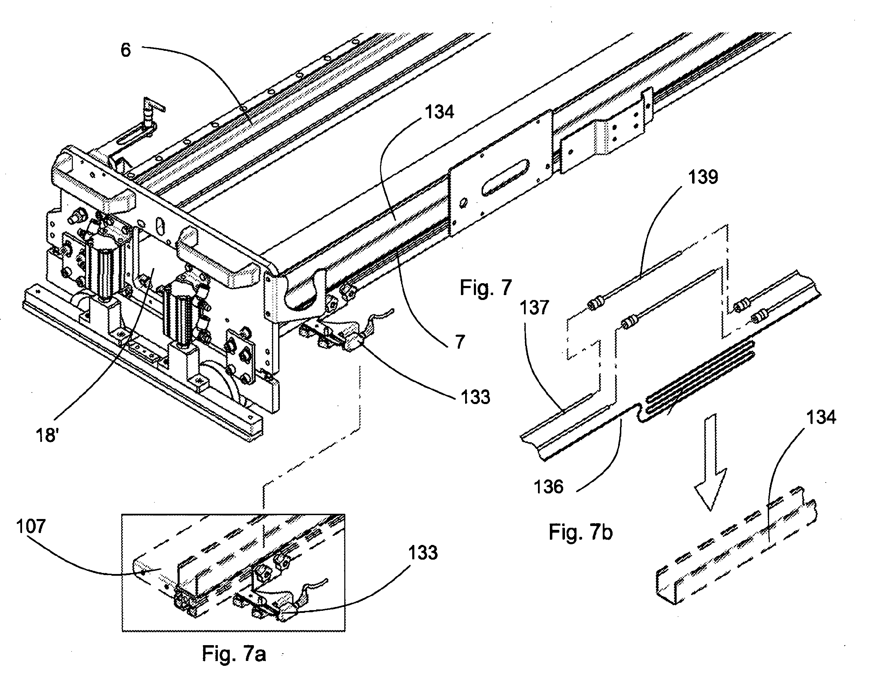

Subsequently (Figures 7, 7a, 7b) the second connecting plate 18' is fixed to the ends of the crosspieces 6 and 7 by the screws 138, the electric cables 136 and the pipes 137 of the pneumatic system are inserted into the channel 134 of the second crosspiece 7, after the electric cables 136 have been folded and after possible extension portions 139 of the pipes 137 of the pneumatic system have been removed.

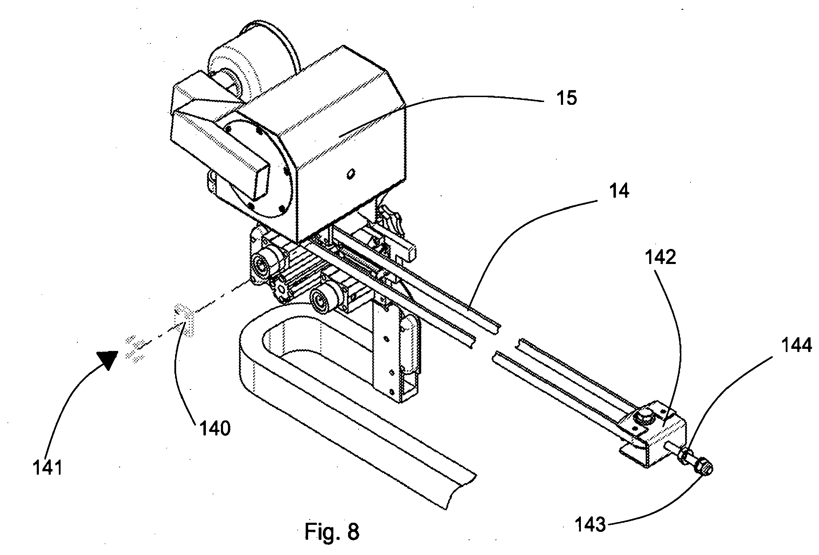

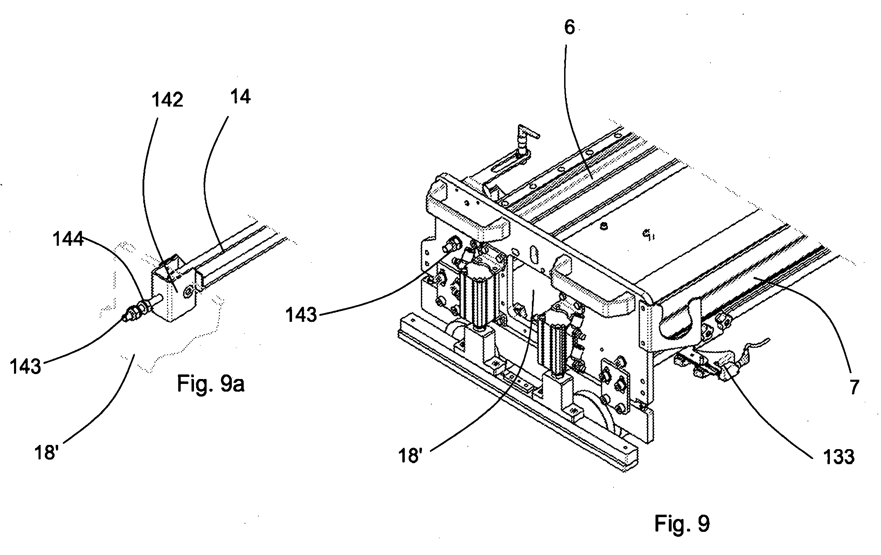

Subsequently (Figure 8), the upper branch 14a of the belt 14 is fixed to the carriage 9 by the clamp 140, shortening the overall length of the belt in such a manner as to adapt the belt to the new, reduced, length, of the apparatus 100. After the belt 14 is fixed to the carriage 9, the belt is tensioned by a tensioning element 142 fixed to the second connecting plate 18', by acting on a tensioning nut 143 and lastly locking in position said tensioning nut with a lock nut 144 (Figures 9, 9a).

Lastly, as by shortening the belt 14, an end portion 14b of the upper branch of the belt remains unused, said end portion 14b is rolled up and inserted into a housing device 146 that can be fixed, for example, to driving means 15 by a screw 147. At this point the device 100 according to the invention is ready to be used.

In order to refit the crosspiece portions 106 and 107 in order to increase the length of the apparatus 100, the operations to be performed are completely similar to the operations disclosed previously in relation to dismantling the crosspiece portions 106 and 107.

The possibility of adapting the apparatus 100 according to the invention to rollers of different length makes the use of the apparatus extremely flexible. Further, it is made possible to use a single apparatus to perform cleaning operations on rollers of different lengths without it being necessary, as for known apparatuses of the prior art, to use different apparatuses for rollers of different lengths. This results in a significant cost saving.

## Claims

1. Apparatus (100) for treating rollers that is suitable for subjecting to a roller maintenance operation (3) a conveying device (2) to eliminate impurities and incrustations from an external surface (13) of said rollers (3), said apparatus (100) comprising a frame (4), provided with a first crosspiece (6) and with a second crosspiece (7) that are parallel and connected to one another at the respective ends by a first connecting plate (18) and a second connecting plate (18'), said apparatus (100) further comprising locking means (19; 19') that is suitable for maintaining said apparatus (100) in a fixed resting position on said conveying device (2) when said rollers (3) are rotated around respective rotation axes (A), lifting means (21; 21') that is suitable for moving said frame (4) away from the external surface (13) of said rollers (3) and cleaning means (8) provided with a carriage (9), that is movable along said crosspiece (6), with a supporting head (16) and with a cleaning tool (17) that is removably couplable with said supporting head (16), **characterised in that** it further comprises a first crosspiece portion (106) that is removably connectable to said first crosspiece (6) and a second crosspiece portion (107) that is removably connectable to said second crosspiece (7), to vary the length of said first crosspiece (6) and of said second crosspiece (7).

2. Apparatus (100) according to claim 1, wherein at one end (6a) of said first crosspiece (6) intended for being coupled with an end (106a) of said first crosspiece portion (106) there is provided a respective first nut screw (124).

3. Apparatus (100) according to claim 2, wherein at said end (106a) of said first crosspiece portion (106) there is provided a second nut screw (125).

4. Apparatus (100) according to claim 3, wherein said first nut screw (124) and said second nut screw (125) are fixable together by a screw (127) that is insertible into a cavity (126) of said first crosspiece portion (106).

5. Apparatus (100) according to any preceding claim, further comprising a connecting element (128) that is suitable for connecting together an end (7a) of said second crosspiece (7) and an end (107a) of said second crosspiece portion (107).

6. Apparatus according to any preceding claim, further comprising further connecting elements (130) suitable for connecting together the respective ends (6a, 106a; 7a, 107a) of said crosspieces (6, 7) and of said crosspiece portions (106, 107).

7. Apparatus (100) according to any preceding claim, further comprising a photocell (133) that is removably fixable to one of said crosspiece portions (106; 107) or to one of said crosspieces (6, 7), said photocell (133) being suitable for detecting an undesired movement of the apparatus (100) in a direction that is parallel to said axis (A) and for activating an alarm signal.

8. Apparatus (100) according to any preceding claim, further comprising removable fixing means (140), suitable for removably fixing a branch (14a) of said belt (14) to said carriage (9).

9. Apparatus (100) according to any preceding claim, further comprising housing means (146) suitable for housing an excess portion (14b) of said branch (14a) when the length of the apparatus (100) is reduced by removing said first crosspiece portion (106) and said second crosspiece portion (107).

10. Apparatus (100) according to any preceding claim, further comprising a tensioning element (142) that is suitable for adjusting the tension of said belt (14) when the length of the apparatus (100) is modified, said tensioning element (142) being connected to said second connecting plate (18').

11. Apparatus (100) according to any preceding claim, wherein, in One of said crosspieces (7) a channel (134) is obtained for housing electric cables (136) and pipes (137) of a pneumatic system of said apparatus (100) and in one of said of crosspiece (107) portions, which is couplable with said crosspiece (7) a channel portion (135) is obtained that constitutes a prolongation of said channel (134), when said crosspiece portion (107) is coupled with said crosspiece (7).

12. Apparatus (100) according to any preceding claims, wherein said cleaning tool (17) comprises a plurality of cleaning elements (27) each of which is partly embedded in a layer (26) of elastic material.

13. Apparatus according to claim 12, wherein each cleaning element (27) comprises at least one edge (28) that projects outside said layer (26) to interact with the external surface (13) of said rollers (3) when said cleaning tool (17) is brought into contact with said external surface (13).

## Patentansprüche

1. Vorrichtung (100) zur Behandlung von Rollen, die geeignet ist, einen Wartungsvorgang für eine Rolle (3) auszuführen, mit einer Fördereinrichtung (2), um Unreinheiten und Verkrustungen von einer Außenfläche (13) der Rollen (3) zu eliminieren, wobei die Vorrichtung (100) einen Rahmen (4) aufweist, der mit einem ersten Querstück (6) und mit einem zweiten Querstück (7) versehen ist, die parallel sind und miteinander an den betreffenden Enden durch eine erste Verbindungsplatte (18) und eine zweite Verbindungsplatte (18') verbunden sind, wobei die Vorrichtung (100) ferner ein Verriegelungsmittel (19; 19') aufweist, das geeignet ist, die Vorrichtung (100) in einer festen Ruheposition an der Fördereinrichtung (2) zu fixieren, wenn die Rollen (3) um ihre betreffenden Drehachsen (A) gedreht werden, ferner mit einem Hebemittel (21; 21'), das geeignet ist, um den Rahmen (4) von der Außenoberfläche (13) der Rollen (3) weg zu bewegen, und mit einem Reinigungsmittel (8), das mit einem Schlitten (9) versehen ist, der entlang des Querstücks (6) beweglich ist, mit einen Stützkopf (16) und mit einem Reinigungswerkzeug (17), das beweglich mit dem Stützkopf (16) koppelbar ist, **dadurch gekennzeichnet, dass** sie ferner einen ersten Querstückbereich (106) aufweist, der lösbar mit dem ersten Querstück (6) verbindbar ist, sowie einen zweiten Querstückbereich (107), der lösbar mit dem zweiten Querstück (7) verbindbar ist, um die Länge des ersten Querstücks und des zweiten Querstücks (7) zu variieren.

2. Vorrichtung (100) nach Anspruch 1, bei der an einem ersten Ende (6a) des ersten Querstücks (6), das zur Kopplung mit einem Ende (106a) des ersten Querstückbereichs (106) vorgesehen ist, eine entsprechende Schraubenmutter (124) vorgesehen ist.

3. Vorrichtung (100) nach Anspruch 2, bei der an dem Ende (106a) des ersten Querstückabschnitts (106) eine zweite Schraubenmutter (125) vorgesehen ist.

4. Vorrichtung (100) nach Anspruch 3, bei der die erste Schraubenmutter (124) und die zweite Schraubenmutter (125) gemeinsam mittels einer Schraube (127) fixierbar sind, die in einen Hohlraum (126) des ersten Querstückbereichs (106) einführbar ist.

5. Vorrichtung (100) nach irgendeinem vorhergehenden Anspruch, ferner umfassend ein Verbindungselement (128), das geeignet ist, ein Ende (7a) des ersten Querstücks (7) und ein Ende (107a) des zweiten Querstückbereichs (107) miteinander zu verbinden.

6. Vorrichtung nach irgendeinem vorhergehenden Anspruch, ferner umfassend weitere Verbindungselemente (130), die geeignet sind, um die betreffenden Enden (6a, 106a; 7a, 107a) der Querstücke (6, 7) und der Querstückbereiche (106, 107) miteinander zu verbinden.

7. Vorrichtung (100) nach irgendeinem vorhergehenden Anspruch, ferner umfassend eine Fotozelle (133), die lösbar an einem der Querstückbereiche (106; 107) oder an einem der Querstücke (6, 7) befestigbar ist, wobei die Fotozelle (133) dazu geeignet ist, eine unerwünschte Bewegung der Vorrichtung (100) in einer Richtung zu detektieren, die parallel zu der Achse (A) ist, und um ein Alarmsignal zu aktivieren.

8. Vorrichtung (100) nach irgendeinem vorhergehenden Anspruch, ferner umfassend ein lösbares Fixiermittel (140), das geeignet ist, einen Abschnitt (14a) des Bandes (14) lösbar an dem Schlitten (9) zu befestigen.

9. Vorrichtung (100) nach irgendeinem vorhergehenden Anspruch, ferner umfassend ein Gehäusemittel (146), das geeignet ist, einen Überstandsbereich (14b) des Abschnittes (14a) aufzunehmen, wenn die Länge der Vorrichtung (100) reduziert wird, indem der erste Querstückabschnitt (106) und der zweite Querstückabschnitt (107) entfernt werden.

10. Vorrichtung (100) nach irgendeinem vorhergehenden Anspruch, ferner umfassend ein Spannelement (142), das geeignet ist, die Spannung des Bandes (14) einzustellen, wenn die Länge der Vorrichtung (100) modifiziert wird, wobei das Spannelement (142) mit der zweiten Verbindungsplatte (18') verbunden ist.

11. Vorrichtung (100) nach irgendeinem vorhergehenden Anspruch, bei der bei einem der Querstücke (7) ein Kanal (134) vorgesehen ist, um elektrische Kabel (136) und Leitungen eines Pneumatiksystems der Vorrichtung (100) und in einem der Querstückabschnitte (107) aufzunehmen, der mit dem Querstück (7) koppelbar ist, wobei ein Kanalabschnitt (135) vorgesehen ist, der eine Verlängerung des Kanals (134) darstellt, wenn der Querstückbereich (107) mit dem Querstück (7) gekoppelt ist.

12. Vorrichtung (100) nach irgendeinem der vorhergehenden Ansprüche, bei dem das Reinigungswerkzeug (17) eine Mehrzahl von Reinigungselementen (27) aufweist, von denen jedes teilweise in einer Schicht (26) aus elastischem Material eingebettet ist.

13. Vorrichtung nach Anspruch 12, bei der jedes Reinigungselement (27) wenigstens eine Kante (28) aufweist, die von der Schicht (26) nach außen hervorsteht, um mit der Außenfläche (13) der Rollen (3) zusammenzuwirken, wenn das Reinigungswerkzeug (17) in Kontakt mit der Außenfläche (13) gebracht wird.

## Revendications

1. Appareil (100) de traitement de rouleaux qui est apte à soumettre à une opération d'entretien de rouleaux (3) un dispositif de transport (2) afin d'éliminer d'une surface externe (13) desdits rouleaux (3) des impuretés et des incrustations, ledit appareil (100) comprenant un cadre (4), pourvu d'une première traverse (6) et d'une deuxième traverse (7) qui sont parallèles et reliées l'une à l'autre à leurs extrémités respectives par une première plaque de liaison (18) et une deuxième plaque de liaison (18'), ledit appareil (100) comprenant en outre des moyens de verrouillage (19 ; 19') qui sont aptes à maintenir ledit appareil (100) dans une position d'appui fixe sur ledit dispositif de transport (2) lorsque lesdits rouleaux (3) sont mis en rotation autour d'axes de rotation (A) respectifs, des moyens de levage (21 ; 21') qui sont aptes à éloigner ledit cadre (4) de la surface externe (13) desdits rouleaux (3), et des moyens de nettoyage (8) pourvus d'un chariot (9), qui est mobile le long de ladite traverse (6), d'une tête de support (16), et d'un outil de nettoyage (17) qui peut être couplé de manière amovible à ladite tête de support (16), **caractérisé en ce qu'**il comprend en outre une première partie de traverse (106) qui peut être reliée de manière amovible à ladite première traverse (6) et une deuxième partie de traverse (107) qui peut être reliée de manière amovible à ladite deuxième traverse (7), afin de faire varier la longueur de ladite première traverse (6) et de ladite deuxième traverse (7).

2. Appareil (100) selon la revendication 1, dans lequel, à une extrémité (6a) de ladite première traverse (6) destinée à être couplée à une extrémité (106a) de ladite première partie de traverse (106), il est prévu une première vis-écrou respective (124).

3. Appareil (100) selon la revendication 2, dans lequel, à ladite extrémité (106a) de ladite première partie de traverse (106), il est prévu une deuxième vis-écrou (125).

4. Appareil (100) selon la revendication 3, dans lequel la première vis-écrou (124) et la deuxième vis-écrou (125) peuvent être fixées ensemble par une vis (127) qui peut être insérée à l'intérieur d'une cavité (126) de ladite première partie de traverse (106).

5. Appareil (100) selon une quelconque revendication précédente, comprenant en outre un élément de liaison (128) qui est apte à relier ensemble une extrémité (7a) de ladite deuxième traverse (7) et une extrémité (107a) de ladite deuxième partie de traverse (107).

6. Appareil (100) selon une quelconque revendication précédente, comprenant en outre des éléments de liaison supplémentaires (130) aptes à relier ensemble les extrémités respectives (6a, 106a ; 7a, 107a) desdites traverses (6, 7) et desdites parties de traverse (106, 107).

7. Appareil (100) selon une quelconque revendication précédente, comprenant en outre une cellule photoélectrique (133) qui peut être fixée de manière amovible à l'une desdites parties de traverse (106 ; 107) ou à l'une desdites traverses (6, 7), ladite cellule photoélectrique (133) étant apte à détecter un mouvement non souhaité de l'appareil (100) dans une direction qui est parallèle audit axe (A) et à activer un signal d'alarme.

8. Appareil (100) selon une quelconque revendication précédente, comprenant en outre des moyens de fixation amovibles (140), aptes à fixer de manière amovible un tronçon (14a) d'une courroie (14) audit chariot (9).

9. Appareil (100) selon une quelconque revendication précédente, comprenant en outre des moyens de logement (146) aptes à loger une partie en dépassement (14b) dudit tronçon (14a) lorsque la longueur de l'appareil (100) est réduite par enlèvement de ladite première partie de traverse (106) et de ladite deuxième partie de traverse (107).

10. Appareil (100) selon une quelconque revendication précédente, comprenant en outre un élément de serrage (142) qui est apte à ajuster la tension de ladite courroie (14) lorsque la longueur de l'appareil (100) est modifiée, ledit élément de serrage (142) étant relié à ladite deuxième plaque de liaison (18').

11. Appareil (100) selon une quelconque revendication précédente, dans lequel, dans l'une desdites traverses (7), un canal (134) est obtenu afin d'héberger des câbles électriques (136) et des conduits (137) d'un système pneumatique dudit appareil (100), et, dans l'une desdites parties de traverse (107), qui peut être couplée à ladite traverse (7), une partie de canal (135) est obtenue, en constituant un prolongement dudit canal (134), lorsque ladite partie de traverse (107) est couplée à ladite traverse (7).

12. Appareil (100) selon l'une quelconque des revendications précédentes, dans lequel ledit outil de nettoyage (17) comprend une pluralité d'éléments de nettoyage (27) qui sont chacun incorporés partiellement dans une couche (26) de matériau élastique.

13. Appareil selon la revendication 12, dans lequel chaque élément de nettoyage (27) comprend au moins un bord (28) qui est en projection au-delà de ladite couche (26) afin d'interagir avec la surface externe (13) desdits rouleaux (3) lorsque ledit outil de nettoyage (17) est mis en contact avec ladite surface externe (13).
